Europäisches Patentamt

European Patent Office

Office européen des brevets

(19)

(11) Numéro de publication : **0 053 560**
**B1**

(12)                    **FASCICULE DE BREVET EUROPÉEN**

(45) Date de publication du fascicule du brevet :
25.07.84

(51) Int. Cl.³ : **B 62 D   5/08**

(21) Numéro de dépôt : **81401888.3**

(22) Date de dépôt : **27.11.81**

(54) **Dispositif de distribution, notamment pour système de direction assistée d'un véhicule automobile.**

(30) Priorité : **02.12.80 FR 8025544**

(43) Date de publication de la demande :
**09.06.82 Bulletin 82/23**

(45) Mention de la délivrance du brevet :
**25.07.84 Bulletin 84/30**

(84) Etats contractants désignés :
**DE GB IT SE**

(56) Documents cités :
**FR-A- 2 160 548**
**FR-A- 2 437 968**
**FR-A- 2 445 255**

(73) Titulaire : **SOCIETE ANONYME D.B.A.**
**Centre Paris Pleyel**
**F-93521 St-Denis Cédex 01 (FR)**

(72) Inventeur : **Kervagoret, Gilbert**
**5 impasse Nobleterre**
**F-95100 Argenteuil (FR)**

(74) Mandataire : **Le Moenner, Gabriel et al**
**SERVICE BREVETS BENDIX 44, Rue François 1er**
**F-75008 Paris (FR)**

EP 0 053 560 B1

## Description

L'invention concerne un dispositif de distribution pour servo-mécanisme hydraulique et notamment une valve de distribution pour un système de direction assistée d'un véhicule automobile présentant des particularités de structure pour éliminer les bruits de fonctionnement tels que les sifflements, qui trouvent leur origine dans des phénomènes de cavitation. En second lieu, l'invention propose une structure de distribution extrêmement simple du point de vue de la fabrication.

On connaît, notamment du document EP-A-0 012 043, un dispositif de distribution pour servo-mécanisme comportant deux éléments de distribution de fluide, cylindriques, coaxiaux, susceptibles d'une rotation relative limitée autour de leur axe commun et comportant des ouvertures et cavités définissant un circuit de circulation de fluide entre une source de fluide et un réservoir de fluide. Plus précisément, le circuit de circulation de fluide est défini par la coopération de rainures longitudinales pratiquées à la surface cylindrique externe de l'élément de distribution interne ou rotor avec des ouvertures pratiquées au travers de la paroi de l'élément de distribution externe ou stator. La coopération des rainures et des fenêtres précitées définit un certain nombre de passages à section variable en fonction de l'angle de rotation relative entre le rotor et le stator. Le document FR-A-2 160 548 prévoit un circuit de distribution de fluide comportant un passage dont la fermeture complète est déterminée à un angle pour lequel tous les autres passages même type sont fermés. Il a été prévu d'autre part dans le document EP-A-0 041 887 publié le 16.12.81 un distributeur du type défini en premier comportant, dans chaque branche, un passage à section variable particulier, dénommé ci-après « passage pour hautes pressions », connecté en série avec une restriction d'écoulement, l'ensemble étant branché entre la prise de pression de la branche considérée et les moyens de raccordement au réservoir précité. Cet agencement permet d'éviter la formation de phénomènes de cavitation dans le passage pour hautes pressions, par la création d'une contrepression notable aux bornes de la restriction d'écoulement. De cette façon, le bruit résultant de la cavitation dans cette plage de fonctionnement du distributeur, est éliminé. Cependant, cette élimination du bruit s'accompagne d'une sensible augmentation de la pression de repos aux deux prises de pression considérées, due au fait que l'agencement anti-bruit est placé en aval de la prise de pression de chaque branche. Si le vérin d'assistance est dissymétrique, la conséquence est une dérive particulièrement sensible en conduite à grande vitesse et en ligne droite.

L'invention concerne une modification de l'agencement anti-bruit pour éliminer la dérive de pression.

Plus précisément, l'invention concerne donc un dispositif de distribution hydraulique pour servo-mécanisme, notamment pour direction assistée, du type comportant deux éléments de distribution de fluide, cylindriques, coaxiaux et susceptibles d'une rotation relative limitée autour de leur axe commun de part et d'autre d'une position relative neutre, ces éléments de distribution comportant des ouvertures et cavités définissant un circuit de circulation de fluide, ce circuit comportant deux branches de distribution agencées en parallèle, munies de passages à sections variables définis dans les surfaces cylindriques de contact desdits éléments de distribution et comportant notamment, dans chaque branche, deux types de passages à sens de variation d'ouvertures inversés, pour un sens quelconque de ladite rotation relative au-delà de ladite position relative neutre, des passages de ces deux types communiquant avec une prise de pression de travail de la branche considérée, caractérisé en ce que chaque branche est pourvue d'au moins un passage à section variable pour hautes pressions dont la fermeture complète, pour un sens de rotation relative correspondant, est déterminé à un angle de rotation relative pour lequel tous les autres passages du même type sont fermés, en ce que ce passage pour hautes pressions est monté en série avec une restriction d'écoulement, et en ce que l'ensemble constitué par ce passage et ladite restriction est branché entre les moyens de raccordement à ladite source de fluide et la prise de pression de ladite branche. Le fait de placer l'agencement antibruit entre la pompe et le vérin, dans chaque branche, élimine toute influence de cet agencement sur la pression de repos.

En second lieu, l'invention a également pour but de simplifier la fabrication des éléments d'un tel distributeur. En particulier, le distributeur connu mentionné en premier ci-dessus comporte de larges fenêtres sensiblement rectangulaires, pratiquées dans le stator, dont deux bordures opposées coopèrent avec deux bordures de rainures adjacentes du rotor, l'une des rainures communiquant avec la source de fluide et l'autre rainure communiquant avec le réservoir. Ces fenêtres rectangulaires nécessitent un usinage précis par électro-érosion, relativement coûteux et délicat à mettre en œuvre dans une chaîne de fabrication en grandes quantités. En particulier, les deux bordures opposées de la fenêtre rectangulaire doivent avoir un profil particulier déterminant la caractéristique Pression-Angle de rotation relative, du distributeur. Selon une particularité avantageuse de l'invention, on obtient une caractéristique du distributeur comparable en remplaçant la fenêtre rectangulaire par une combinaison de trous à contour circulaire. Ce dernier point fait par ailleurs l'objet de la demande de brevet parallèle n° 81 401 887.5 (EP-A-0 053 559) bénéficiant de la même date de priorité que la présente demande.

L'invention sera mieux comprise et d'autres avantages de celle-ci apparaîtront mieux à la lumière de la description qui va suivre de plusieurs modes de réalisation d'un dispositif de distribution hydraulique conforme à l'invention, donnée uniquement à titre d'exemple et faite en référence aux dessins annexés dans lesquels :

La figure 1 représente une vue générale en coupe partielle d'un dispositif formant valve de distribution, selon l'invention, pour un système de direction assistée de véhicule ;

La figure 2 est un schéma illustrant le circuit hydraulique de ce système de direction assistée, utilisant la valve de distribution de la figure 1 ;

La figure 3 est une vue développée des deux éléments de distribution de la valve de la figure 1 avec, sur la partie droite en considérant le dessin, une vue schématique en coupe de l'élément de distribution le plus externe coopérant avec le boîtier fixe de la valve auquel sont raccordés, selon une représentation schématique, les autres parties du circuit hydraulique de la figure 2 ;

La figure 4 est une section IV-IV de la figure 3 ;

La figure 5 est une vue analogue à celle de la figure 3, d'une première variante possible et,

La figure 6 est une vue analogue à celle de la figure 3, d'une seconde variante possible.

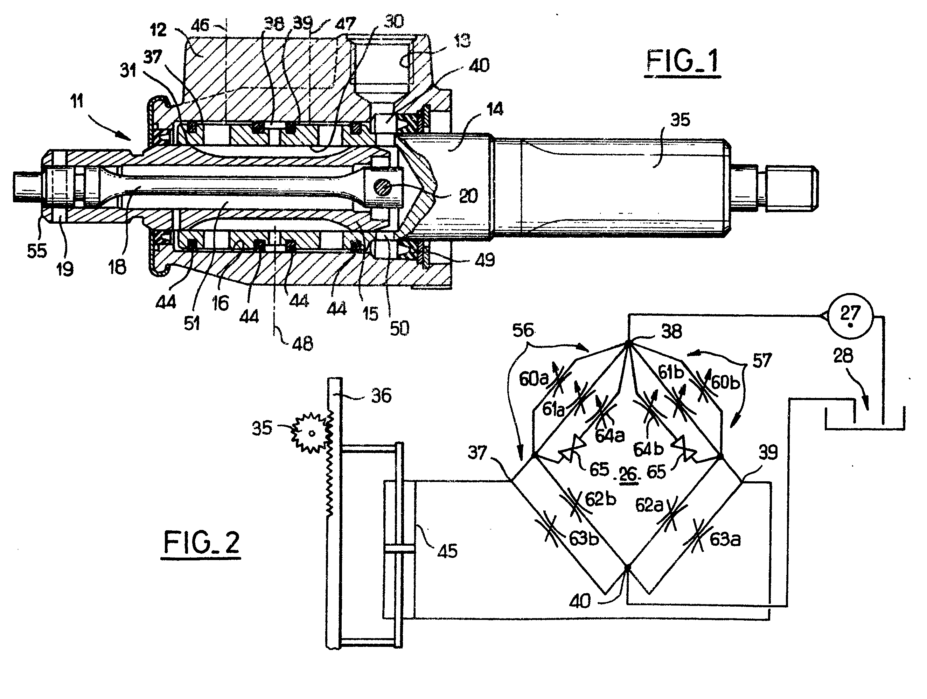

En se reportant à la figure 1, le dispositif de distribution 11 selon l'invention comporte essentiellement un boîtier 12 fixe, muni d'embout de raccordement tels que, par exemple, l'embout 13 et comportant un alésage 16 abritant deux éléments de distribution de fluide 14 et 15, cylindriques et coaxiaux, comportant chacun une partie en forme de manchon. De façon classique, l'élément de distribution 15, le plus interne, est guidé en rotation dans le manchon formé par l'élément de distribution 14, le plus externe, tandis que l'espace interne du manchon formé par l'élément de distribution 15 abrite une barre de torsion 18 connectée, par l'une de ses extrémités, à l'élément de distribution 14 par une goupille 20. Cette barre de torsion constitue donc, de façon bien connue, un moyen de rappel en position relative neutre autorisant une rotation limitée, de quelques degrés, d'un élément de distribution par rapport à l'autre autour de leur axe commun (confondu avec celui de la barre de torsion 18) et de part et d'autre de ladite position relative neutre. En outre, les éléments de distribution comportent aussi des ouvertures et des cavités dont l'agencement complexe sera décrit plus en détail en référence aux Figures 2 à 4, et qui définissent un circuit de circulation de fluide 26 (voir Figure 2) entre une source de fluide telle qu'une pompe 27 et un réservoir de fluide 28. On notera seulement à ce stade de la description que les ouvertures et cavités précitées coopèrent pour former des passages à section variable opérant par recouvrement des surfaces cylindriques en contact 30 et 31 des éléments de distribution 14 et 15, respectivement lors d'une rotation relative limitée précitée. Le dispositif de distribution 11 étant plus particulièrement destiné à un système de direction assistée, le manchon externe formant l'élément de distribution 14 est prolongé par un arbre de sortie 35 destiné à être couplé, par exemple, à une crémaillère 36 (voir figure 2) d'un mécanisme de direction de roues. Cet élément de distribution 14, appelé aussi stator, est guidé en rotation dans l'alésage 16 et des espaces annulaires (37, 38, 39, 40) adjacents longitudinalement, sont individualisés entre la surface externe de l'élément de distribution 14 et la surface de l'alésage 16, au moyen de joints d'étanchéité annulaires 44 et 49, pour former des parties du circuit de circulation de fluide 26 et notamment deux prises de pression de travail, confondues avec les espaces annulaires 37 et 39 et destinées à être reliées aux deux chambres de pression d'un moteur hydraulique d'assistance tel qu'un vérin à double effet 45 (figure 2) lié à la crémaillère 36. Les espaces annulaires 37 et 39 sont en communication avec le vérin 45 au moyen d'embouts de raccordement du boîtier 12, non visibles sur la figure 1, mais symbolisés par les traits d'axe 46 et 47, respectivement. De façon analogue, l'espace annulaire 38 est raccordé à la sortie de la pompe 27 par un embout de raccordement du boîtier 12 symbolisé par le trait d'axe 48, l'ensemble constituant les moyens de raccordement à la source de fluide, cités plus haut. L'espace 40 (délimité à l'une de ses extrémités par le joint d'étanchéité 49) communique avec l'embout de raccordement 13 qui constitue la sortie de retour au réservoir 28. Des trous radiaux 50 dans l'élément 14 mettent l'espace 40 en communication avec l'espace interne 51 de l'élément de distribution 15, dans lequel est logée la barre de torsion 18. L'élément de distribution 15, le plus interne, est encore appelé rotor car il est destiné à être connecté par son extrémité axiale 55 à la colonne de direction (non représentée) d'un véhicule.

On va maintenant décrire le circuit de circulation de fluide 26 en référence aux figures 2 à 4. De façon classique, ce circuit se compose essentiellement de deux branches parallèles 56, 57 munies des passages à section variable précités. On distingue deux types de passage à sens de variation d'ouverture inversés pour un sens quelconque de ladite rotation relative au-delà de la position relative neutre précitée des deux éléments de distribution 14 et 15. Dans cette position neutre, la barre de torsion 18 ne subit aucune contrainte. Dans la suite de la description, les passages de l'un ou l'autre type seront différenciés par des références numériques portant les indices « a » ou « b », respectivement. Ainsi, selon une particularité de l'invention, on distingue deux passages 60a, 61a dans la branche 56 agencés en parallèle entre l'espace annulaire 38 d'alimentation en fluide et la prise de pression 37 et deux passages 62a, 63a dans la branche 57 agencés en parallèle entre la prise de pression 39 et l'espace annulaire 40 de retour au réservoir, (voir figure 2). De façon analogue, on distingue deux passages 60b, 61b dans la branche 57, agencés en parallèle entre l'espace annulaire 38 et la prise de pression 39 ainsi que deux passages 62b, 63b, dans la branche 56 agencés en parallèle entre la prise de pression 37 et l'espace annulaire 40. Ainsi, chaque branche 56 ou 57 comporte des passages à section variable des deux types (indices « a » et « b ») montés en série entre la source de fluide (pompe 27) et le réservoir 28 et une portion de circuit entre des passages de types différents communique avec une prise de pression (37, 39) de la branche (56, 57, respectivement) considérée.

En outre, on distingue deux autres passages à section variable qui seront dénommés ci-après « passages pour hautes pressions », un passage 64a dans la branche 56 et un passage 64b dans la branche 57. Le passage 64 a est monté en série avec une restriction d'écoulement 65, à section d'écoulement constante, et l'ensemble constitué par ce passage et cette restriction est branché entre l'espace annulaire 38 et la prise de pression 37. Pareillement, le passage 64b est monté en série avec une restriction d'écoulement 65, à section d'écoulement constante, et l'ensemble constitué par ce passage et cette restriction est branché entre l'espace annulaire 38 et la prise de pression 39. On appelle les passages 64a et 64b des « passages pour hautes pressions » parce que leur fermeture complète, pour un sens de rotation relative correspondant, est déterminée à un angle pour lequel tous les autres passages du même type sont déjà fermés. Par exemple, la fermeture complète du passage 64a n'intervient qu'« après » celle des passages 60a, 61a, 62a, 63a, pour un sens de rotation relative donné et pendant cette ultime plage de rotation relative possible entre les éléments de distribution 14 et 15, le débit de fluide dans la branche 56 est essentiellement déterminé par les sections des passages 64a et 65. On notera que sur cette plage mettant en jeu des pressions de fonctionnement relativement élevées, l'écoulement de fluide est totalement interrompu entre la prise de pression 39 et l'espace annulaire 40 tandis que la chute de pression entre l'espace annulaire 38 et la prise de pression 37 (dont la pression est très proche de celle du réservoir 28 à cause de l'ouverture des passages 62b, 63b) est totalement assurée par le débit de fluide au travers des passages 64a et 65 branchés en série. Une perte de charge notable apparaît ainsi aux bornes de la restriction 65 de la branche 56. Cette contre-pression aux bornes de la restriction 65 permet de repousser le seuil de cavitation dans le passage 64a et donc de repousser également le seuil de fonctionnement bruyant du distributeur, lequel seuil dépend avantageusement de la valeur de la contre-pression. Ainsi, une contre-pression de quelques bars suffit à repousser le seuil de fonctionnement bruyant à plusieurs dizaines de bars en amont du passage 65 correspondant. Le bruit de fonctionnement est ainsi éliminé sur toute la plage de rotation relative des éléments du distributeur, c'est-à-dire sur toute la gamme de pression de manœuvre du vérin 45. Pareillement la fermeture complète du passage 64b n'intervient qu'« après » celle des passages

60b, 61b, 62b, 63b, et il va de soi que tout ce qui a été décrit ci-dessus en référence au passage 64a et à la restriction 65 dans la branche 56 est valable pour le passage 64b et la restriction 65 dans la branche 57, pour l'autre sens de rotation relative.

Il est avantageux de placer le branchement en série du passage pour hautes pressions (64a, respectivement 64b) et de la restriction 65 en amont du vérin 45 car, avec un tel agencement, le système anti-bruit est sans influence sur la pression de repos, ce qui réduit sensiblement la dérive en conduite en ligne droite et à grande vitesse, notamment si le vérin d'assistance utilisé est dissymétrique.

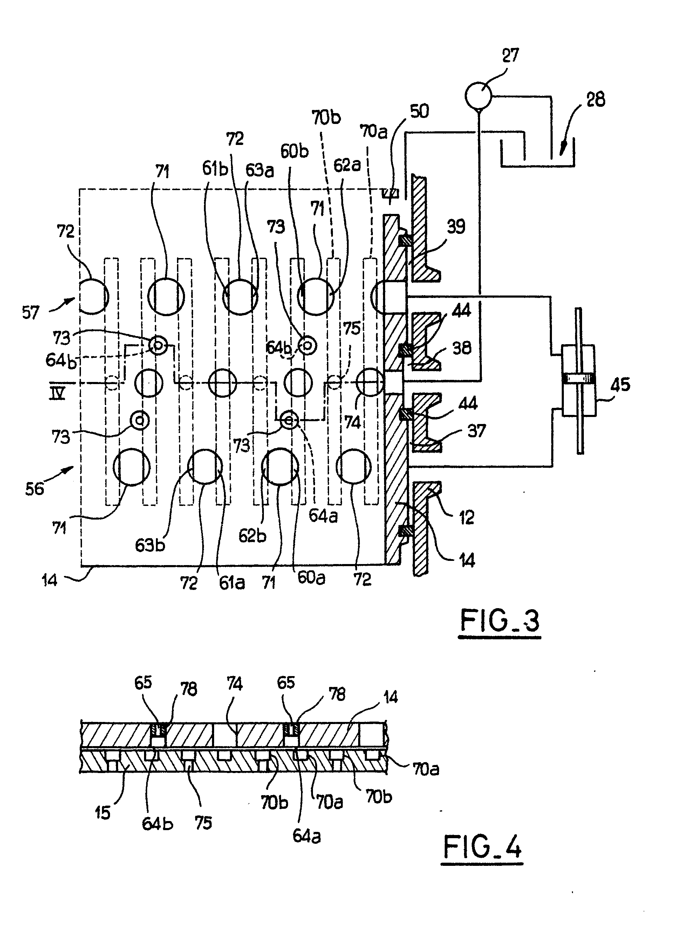

Les figures 3 et 4 montrent comment sont réalisés les différents passages et restrictions d'écoulement constituant le circuit de circulation de fluide 26.

L'élément de distribution 15, formant rotor, est muni de huit rainures longitudinales 70 creusées dans sa surface cylindrique externe 31 et fermées à leurs extrémités axiales. Ces rainures sont régulièrement angulairement décalées de 45° les unes par rapport aux autres. Quatre rainures 70a ou rainures d'amenée de fluide, sont fermées et disposées en permanence en regard de trous à contour circulaire 74 de l'élément de distribution 14 qui communiquent avec l'espace annulaire 38 relié à la pompe 27. Quatre autres rainures 70b, ou rainures d'évacuation de fluide, sont disposées en alternance avec les rainures 70a et percées de trous 75 établissant la communication avec l'espace interne 51 abritant la barre de torsion 18, c'est-à-dire avec le réservoir 28 via les trous d'évacuation 40 et l'embout 13.

L'élément de distribution 14 ne comporte quant à lui que des trous à contour circulaire 71, 72, 73 pour matérialiser tous les passages à section variable précités, opérant par chevauchement partiel desdites rainures et desdits trous.

Cette particularité de l'invention est avantageuse car elle permet d'éliminer le façonnage par électro-érosion des ouvertures pratiquées à travers l'élément de distribution 14. Selon l'invention, on peut néanmoins adapter la caractéristique « Pression-Angle de rotation relative » du distributeur à toute loi de variation voulue par le fait que des passages d'un même type sont agencés en parallèle dans une même branche 56 ou 57 du circuit 26 avec des sections d'écoulement différentes au moins pour une plage de rotation relative entre les deux éléments de distribution autour de la position relative neutre. On obtient ainsi une loi de variation voulue entre l'accroissement de pression disponible à l'une des prises de pression et l'angle de rotation relative dans le sens correspondant, par un choix judicieux d'une combinaison d'ouverture à sections d'écoulement différentes, ces sections d'écoulement différentes étant par exemple considérées à la position relative neutre des éléments du distributeur. Dans le mode de réalisation des figures 3 et 4, les différences de section d'écoulement entre passages 60, 61, (ou 62, 63) sont simplement obtenues par des différences de diamètre entre les trous 71 et 72 correspondants. En effet, certains passages de types différents d'une même branche (60a, 62b) ou (61a, 63b) sont agencés par paires et une paire est définie par la coopération d'un trou du stator 14 (71 ou 72, respectivement) avec deux rainures 70a, 70b, adjacentes, communiquant respectivement avec la pompe 27 et le réservoir 28, ledit trou étant équidistant des deux rainures dans la position relative neutre illustrée notamment à la figure 3. On conçoit donc qu'avec un tel agencement, une simple différence de diamètre des trous 71 et 72, conditionne entièrement les sections d'écoulement des passages 60a, 62b, 61a, 63b, les uns par rapport aux autres. Dans l'exemple illustré à la figure 3, les trous 71 ont un diamètre supérieur au trou 72. En revanche, les passages pour hautes pressions précités, (64a ou 64b) ne sont pas agencés par paires mais simplement matérialisés par la coopération d'un trou 73 avec une bordure de l'une des rainures 70a, la bordure étant choisie en fonction du sens de variation de sections recherchées. Plus précisément, pour chaque branche 56, 57, un trou 73 de l'un desdits passages pour hautes pressions coopère avec une bordure de rainure 70a qui matérialise aussi le passage de même type (60a, respectivement 60b) de l'une des paires de passages précitée en coopération avec un trou 71 chevauchant partiellement deux rainures 70a, 70b, adjacentes. Bien entendu, le positionnement des trous 73 par rapport aux rainures 70a est tel que la fermeture complète des passages 64 est déterminée à un angle de rotation relative pour lequel tous les autres passages du même type sont fermés, comme mentionné précédemment. D'autre part, le diamètre des trous 73 est notablement inférieur à celui des trous 71 et 72 de sorte qu'ils ne peuvent jamais communiquer avec les rainures 70b adjacentes.

On a déterminé que la combinaison de 2 et de préférence, 3 passages de sections initiales différentes, définis par la coopération de rainures rectilignes du rotor et de trous à contour circulaire du stator, permettait d'obtenir une caractéristique « Pression-Angle de rotation relative » convenable, notamment, approximativement parabolique comparable à ce qui était obtenu avec une combinaison de passages à section variable dont certains comportaient des fenêtres de forme rectangulaire à bordure non rectiligne et nécessitant la mise en œuvre de phases d'usinages par électro-érosion. D'autre part, chaque restriction d'écoulement 65 précitée est formée dans le stator 14 par une portion tubulaire 78, ou bague, de section intérieure déterminée, obturant partiellement, sur une partie de sa profondeur, le trou 73 du passage pour hautes pressions 64a ou 64b avec lequel elle est montée en série (voir figure 4). Enfin, il faut noter une autre particularité de structure simplifiant la fabrication. Chaque branche 56, 57 selon le mode de réalisation des figures 3 et 4 comporte en fait le double de passages à sections variables par rapport à la représentation schématique de la figure 2. Autrement dit, chaque branche 56 ou 57 est pourvue de deux séries identiques de paires de passages précités et deux passages pour hautes pressions (64a ou 64b) lesdits trous à contour circulaire (71, 72, 73) de même diamètre étant diamétralement opposés deux à deux sur l'élément de distribution cylindrique 14 qui les porte. Ainsi, on compte deux trous 71, deux trous 72, deux trous 73 par branches 56 ou 57 de sorte que l'usinage du stator 14 est essentiellement composé d'opérations de perçage extrêmement simples, suivant des diamètres du manchon 14. Dans le même esprit, il est à noter que les trous 74 sont aussi à contour circulaire et deux à deux diamétralement opposés.

Le fonctionnement de la valve de distribution est le suivant. Si on suppose que l'utilisateur sollicite le rotor 15 en rotation dans le sens des aiguilles d'une montre, tous les passages portant l'indice « a » vont se fermer et tous les passages portant l'indice « b » vont s'ouvrir. Le diamètre des trous 71 étant supérieur à celui des trous 72, se sont les passages 61a de la branche 56 et 63a de la branche 57 qui se fermeront complètement en premier lieu. Ensuite, pour une rotation relative supplémentaire des deux éléments du distributeur, on aboutira à une fermeture complète des passages 60a et 62a. Pendant toute cette course de rotation relative, l'augmentation de pression à la prise de pression 39 évolue suivant une courbe prédéterminée en fonction de l'angle de rotation relative (notamment une courbe sensiblement parabolique) cette courbe résultant du choix des diamètres des trous 71, 72 et 73 et du positionnement particulier des trous 73. Pour une rotation relative supplémentaire dans le même sens, toute communication entre la prise de pression 39 et le réservoir 28 est interrompue (donc pas de cavitation dans cette branche) et, dans la branche opposée 56, la chute de pression entre l'espace annulaire 38 relié à la pompe 27 et la prise de pression 37 est totalement assurée par le débit de fluide au travers du passage 64a et de la restriction 65 en série avec lui, comme mentionné précédemment. La cavitation est évitée dans cette partie de la branche 56 par l'apparition d'une contre-pression en amont de la restriction 65, de sorte que le fonctionnement reste silencieux même dans ces conditions de fonctionnement à hautes pressions correspondant notamment aux manœuvres de garage du véhicule équipé d'un tel système de direction assistée.

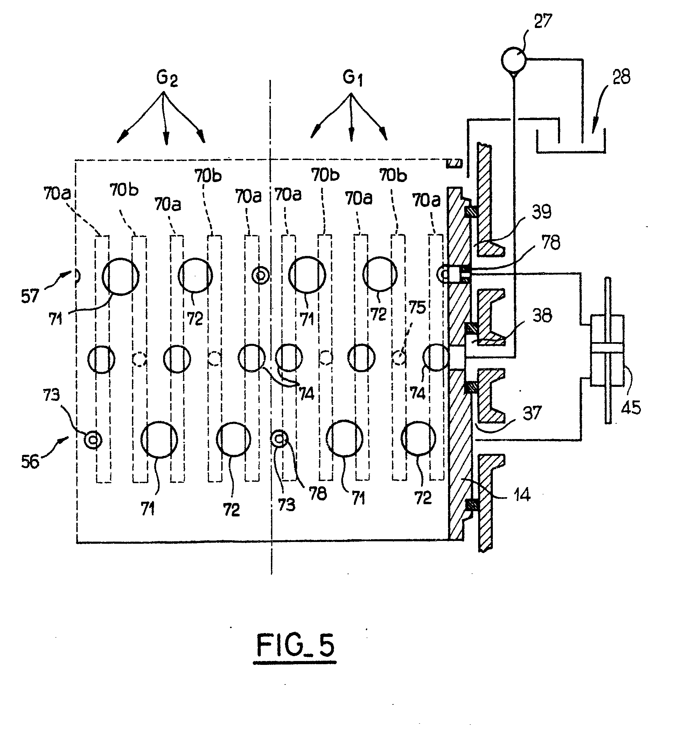

Le mode de réalisation schématisé à la figure 5, dans laquelle les éléments de structure déjà décrits portent les mêmes références numériques, est particulièrement adapté pour un modèle de distributeur à encombrement axial réduit. Dans ce cas, il est nécessaire de prévoir des rainures d'amenée de fluide 70a spécifiques pour définir les passages pour hautes pression mentionnés plus haut, de façon à obtenir une meilleure répartition des débits dans le circuit de distribution et limiter les pertes de charge. Autrement dit, il n'est plus souhaitable, lorsqu'on atteint un degré de miniaturisation poussé, de définir certains passages de même type (tels que 60a et 64a en référence à la figure 3, par exemple) à partir d'une même rainure d'amenée de fluide. Selon le mode de réalisation de la figure 5, on prévoit donc dix rainures : six rainures d'amenée de fluide 70a communiquant par des trous 74 pratiqués dans le stator 15 avec l'espace annulaire 38 et quatre rainures d'évacuation de fluide 70b communiquant comme précédemment avec le réservoir 28. Ces rainures sont réparties en symétrie circulaire à la surface externe du rotor 14, alternativement en deux groupes $G_1$ et $G_2$ comportant chacun trois rainures 70a et deux rainures 70b. Par ailleurs, pour chaque branche 56 ou 57, l'une des rainures d'amenée de fluide 70a d'un groupe $G_1$ ou $G_2$ coopère exclusivement avec un trou 73 de l'un des passages pour hautes pression (64a ou 64b) précités tandis que les deux autres rainures 70a de ce même groupe coopèrent respectivement avec les deux autres rainures 70b d'évacuation de fluide et avec les trous 71 et 72 de diamètres différents, pour définir les deux paires de passages à sections variables, de façon comparable à ce qui a été expliqué en référence à la figure 3.

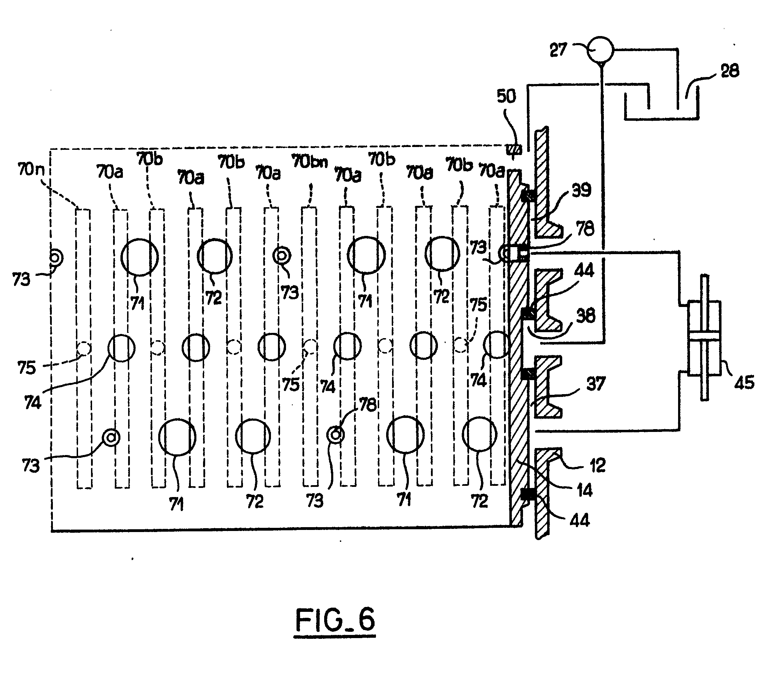

Pour des raisons d'équilibrage des deux éléments 14 et 15 du distributeur, on pourra préférer le mode de réalisation de la figure 6 qui comporte douze rainures tout en conservant le même principe de distribution que celui qui est schématisé à la figure 5. Selon cette nouvelle variante, on prévoit alors six rainures d'amenée de fluide 70a et six rainures d'évacuation de fluide 70b réparties alternativement en symétrie circulaire à la surface du rotor 15. Pour chaque branche 56 ou 57, on a donc deux rainures 70a qui coopèrent respectivement et exclusivement avec deux trous 73 de cette branche, de façon à définir les passages pour hautes pressions définis plus haut, tandis que les quatre autres rainures 70a coopèrent respectivement avec quatre rainures d'évacuation de fluide 70b et avec les trous 71, 72 de diamètres différents pour définir les deux séries de deux paires de passages, de façon analogue aux modes de réalisation des figures 3 et 5. Les deux dernières rainures d'évacuation de fluide 70bn, ou rainures neutres, ne coopèrent avec aucun trou du stator 15. En fonctionnement, particulièrement aux hautes pressions l'agencement des rainures dans lesquelles règnent la haute pression de la pompe et la basse pression du réservoir, en alternance régulièrement à la surface du rotor, permet de réduire très sensiblement les effets de « collage » du rotor sur le stator.

**Revendications**

1. Dispositif de distribution hydraulique pour servo-mécanisme, notamment pour direction assistée, du type comportant deux éléments de distribution de fluide (14, 15), cylindriques, coaxiaux et susceptibles d'une rotation relative limitée autour de leur axe commun de part et d'autre d'une position relative neutre, ces éléments de distribution (14, 15) comportant des ouvertures et cavités définissant un circuit de circulation de fluide (26) connectable entre une source de fluide (27) et un réservoir de fluide (28), ce circuit comportant deux branches de distribution (56, 57) agencées en parallèle, munies de passages à section variable (60, 61, 62, 63, 64) définis dans les surfaces cylindriques de contact (30, 31) desdits éléments de distribution (14, 15) et comportant notamment, dans chaque branche (56, 57), deux types (a, b) de passages à sens de variation d'ouverture inversés pour un sens quelconque de ladite rotation relative au-delà de ladite position relative neutre, des passages de ces deux types (« a », « b ») communiquant avec une prise de pression de travail (37, 39) de la branche considérée, caractérisé en ce que chaque branche (56, 57) est pourvue d'au moins un passage à section variable pour hautes pressions (64a, 64b) dont la fermeture complète, pour un sens de rotation relative correspondant, est déterminée à un angle de rotation relative, pour lequel tous les autres passages (60-64) du même type sont fermés, en ce que ce passage pour hautes pressions (64a, 64b) est monté en série avec une restriction d'écoulement (65) et en ce que l'ensemble constitué par ce passage (64a, 64b) et ladite restriction (65) est branché entre des moyens de raccordement (38) à ladite source de fluide (27) et la prise de pression (37, 39) de ladite branche.

2. Dispositif selon la revendication 1 du type dans lequel lesdits passages à section variable sont matérialisés par le chevauchement partiel de rainures longitudinales (70) creusées dans une surface cylindrique de l'un (15) des éléments de distribution et de trous pratiqués au travers de l'autre (14) élément de distribution caractérisé en ce que le trou (73) qui correspond audit passage pour hautes pressions est partiellement obturé sur une partie de sa profondeur par une portion tubulaire (78) de section intérieure déterminée matérialisant ladite restriction d'écoulement (65) avec laquelle ledit passage pour hautes pressions est monté en série.

3. Dispositif selon la revendication 2, caractérisé en ce que ledit trou (73) qui correspond audit passage pour hautes pressions est un trou à contour circulaire percé radialement au travers de l'élément de distribution (14) correspondant.

4. Dispositif selon l'une des revendications précédentes, du type dans lequel lesdits passages à sections variables sont matérialisés par le chevauchement partiel de rainures longitudinales (70) creusées dans une surface cylindrique de l'un des éléments de distribution et de fenêtres pratiquées au travers de l'autre élément de distribution, caractérisé en ce que toutes lesdites fenêtres (71, 72, 73) sont des trous à contour circulaire.

5. Dispositif selon la revendication 4, caractérisé en ce que des passages d'un même type (« a » ou « b ») sont agencés en parallèle dans une même branche (56 ou 57) dudit circuit avec des sections d'écoulement différentes au moins pour une plage de rotation relative entre les deux éléments de distribution autour de ladite position relative neutre, pour obtenir une loi de variation voulue entre l'accroissement de pression disponible à l'une desdites prises de pression et l'angle de rotation relative dans le sens correspondant.

6. Dispositif selon la revendication 5 caractérisé en ce que des passages de type différent d'une même branche étant agencés par paires, une paire est définie par la coopération d'un trou (71 ou 72) précité avec deux rainures (70a, 70b) parallèles, adjacentes, dont l'une communique avec des moyens de raccordement (38) à ladite source de fluide et l'autre avec des moyens de raccordement (40) audit réservoir de fluide, ledit trou étant équidistant de ces deux rainures dans ladite position relative neutre et en ce que deux paires différentes d'une même branche sont pourvues de trous respectifs (71, 72) de diamètres différents.

7. Dispositif selon la revendication 6, caractérisé en ce que chaque branche précitée (56, 57) est pourvue de deux séries identiques de paires de passages précités et de deux passages (64a ou 64b) pour hautes pressions précités, lesdits trous à contour circulaire (71, 72, 73) de même diamètre étant diamétralement opposés deux à deux sur l'élément de distribution cylindrique (14) dans lequel ils sont pratiqués.

8. Dispositif selon la revendication 7, caractérisé en ce que l'élément de distribution (15) qui porte les rainures précitées est munie de huit rainures, quatre rainures d'amenée de fluide (70a) communiquant avec les moyens de raccordement (38) à ladite source de fluide et quatre rainures d'évacuation de fluide (70b) communiquant avec lesdits moyens de raccordement (40) audit réservoir (28), ces rainures étant réparties alternativement en symétrie circulaire et en ce que, pour chaque branche, un trou (73) de l'un des passages pour hautes pressions coopère avec une bordure de rainure (70a) qui matérialise aussi le passage de même type de l'une des paires de passages précitées, en coopération avec un trou (71) précité chevauchant partiellement deux rainures (70a, 70b) adjacentes.

9. Dispositif selon la revendication 7, caractérisé en ce que l'élément de distribution (15) qui porte les rainures précitées est muni de dix rainures : six rainures d'amenée de fluide (70a) communiquant avec lesdits moyens de raccordement à ladite source et quatre rainures d'évacuation de fluide (70b) communiquant avec lesdits moyens de raccordement audit réservoir, ces rainures étant réparties en symétrie circulaire alternativement en deux groupes ($G_1$ et $G_2$) comportant chacun trois rainures d'amenée de fluide et deux rainures d'évacuation de fluide, en ce que, pour chaque branche, l'une des rainures d'amenée de fluide de chaque groupe coopère avec un trou de l'un des passages pour hautes pression tandis que les deux autres rainures d'amenée de fluide (70a) coopèrent respectivement avec les deux autres rainures d'évacuation de fluide (70b) et avec les trous (71, 72) de diamètres différents pour définir deux paires de passages différentes précitées.

10. Dispositif selon la revendication 7, caractérisé en ce que l'élément de distribution (15) qui porte les rainures précitées est muni de douze rainures, six rainures d'amenée de fluide (70a) communiquant avec lesdits moyens de raccordement à ladite source de fluide et six rainures d'évacuation de fluide (70b) communiquant avec lesdits moyens de raccordement audit réservoir, ces rainures étant réparties alternativement en symétrie circulaire, en ce que, pour chaque branche (56 ou 57), deux rainures d'amenée de fluide coopèrent respectivement avec deux trous (73) des passages pour hautes pressions tandis que les quatre autres rainures d'amenée de fluide (70a) coopèrent respectivement avec quatre rainure d'évacuation de fluide (70b) et avec les trous de diamètre différents (71, 72) précités pour définir deux séries de deux paires de passages différentes précitées.

11. Dispositif selon la revendication 10, caractérisé en ce que les deux autres rainures d'évacuation de fluide (70bn) précitées ne coopèrent avec aucun des trous à contour circulaire précités.

## Claims

1. A hydraulic distribution device for a servo mechanism, in particular for a servo steering system, of the type comprising a pair of cylindrical, coaxial fluid distribution elements (14, 15) adapted to perform a limited relative rotation about their common axis in either direction from a relative neutral position, said distribution elements comprising openings and cavities defining a fluid circuit (26) connectable between a fluid source (27) and a fluid reservoir (28), said circuit comprising a pair of distribution branches (56, 57) connected in parallel and provided with passages (60, 61, 62, 63, 64) of variable cross-section defined in the cylindrical surface of contact of said distribution elements and comprising in each branch two types of passages having opposite opening senses in either direction of relative rotation from said relativ neutral position, passages of the two types (« a », « b ») communicating with a work pressure connection (37, 39) of the considered branch, characterized in that each branch is provided with at least one high-pressure passage (64a, 64b) of variable cross-section, the complete closing of which for a corresponding direction of relative rotation is determined by an angle of relative rotation at which all the other passages of the same type are closed, in that this high-pressure passage is connected in series with a flow restriction (65), and in that the assembly comprised of this passage and said restriction is connected between connection means (38) of said fluid source and the pressure connection of said branch.

2. The device of claim 1 of the type in which said passages of variable cross-section are formed by a partial overlapping of longitudinal grooves (70) in a cylindrical surface of one (15) of the distribution elements and openings extending through the other distribution element (14), characterized in that the opening (78) that corresponds to said high-pressure passage is partially closed along a part of its depth by a tubular portion (78) of a predetermined inner cross-section forming said flow restriction (56) with which said high-pressure passage is connected in series.

3. The device of claim 2 characterized in that said opening (78) that corresponds to said high-pressure passage is an opening of a circular form radially bored through the corresponding distribution element (14).

4. The device of any of the preceding claims, of the type in which said passages of variable cross-section are formed by the partial overlapping of longitudinal grooves (70) formed in a cylindrical surface of the one of the distribution elements and windows extending through the other distribution elements, characterized in that all said windows (71, 72, 73) are openings having a circular form.

5. The device of claim 4 characterized in that passages of the same type (« a » or « b ») are connected in parallel in one of said branches (56 or 57) of said circuit, while having different flow cross-sections for at least one stroke of relative rotation between the two distribution elements from said relative neutral position in order to obtain a desired law of variation between the pressure increase available at one of said work pressure connections and the angle of relative rotation in the corresponding direction.

6. The device of claim 5 characterized in that, passages of different types of one and the same branch being disposed in pairs, one pair is defined by cooperation of one of said openings (71 or 72) with a pair of adjacent parallel grooves (70a, 70b), one of which communicates with connection means (38) of the fluid source and the other of which communicates with connection means (40) of said fluid reservoir (28), said opening being equidistant of said two grooves at said relative neutral position, and in that two different pairs of one and the same branch are provided with corresponding openings (71, 72) of different diameters.

7. The device of claim 6 characterized in that each recited branch (56, 57) is provided with two identical series of pairs of said passages and of two recited high-pressure passages (64a or 64b), said openings of circular form (71, 72, 73) of the same diameter being diametrically opposed in pairs on the cylindrical distribution element (14) in which they are provided.

8. The device of claim 7 characterized in that the distribution element (15) which comprises said grooves is provided with eight grooves, four fluid inlet grooves (70a) communicating with the connection means (38) of said fluid source and four fluid discharge grooves (70b) communicating with said connection means (40) of the reservoir (28), these grooves being alternatively distributed in circular symmetry, and in that for each branch an opening (73) of one of the high-pressure passages cooperates with an edge of the groove (70a) which also forms the passage of the same type of one of said pair of passages, in cooperation with a recited opening (71) partially overlapping two adjacent grooves (70a, 70b).

9. The device of claim 7 characterized in that the distribution element (15) which comprises said grooves is provided with ten grooves : six fluid inlet grooves (70a) communicating with said connection means of the fluid source and four fluid discharge grooves (70b) communicating with said connection means of the reservoir, these grooves being distributed in circular symmetry alternatively in two groups ($g_1$ and $G_2$), each comprising three fluid inlet grooves and two fluid discharge grooves, in that for each branch one of said fluid inlet grooves of each group cooperates with an opening of one of the high-pressure passages while the two other fluid inlet grooves (70a) respectively cooperate with the two other fluid discharge grooves (70b) and with the openings (71, 72) of different diameters for defining two of said different pairs of passages.

10. The device of claim 7 characterized in that the distribution element (15) which comprises said grooves is provided with twelve grooves, six fluid inlet grooves (70a) communicating with said connection means of said fluid source and six fluid discharge grooves (70b) communicating with said connection means of said reservoir, said grooves being alternatively distributed in circular symmetry, in that for each branch (56 or 57) two fluid inlet grooves cooperate with two openings (73) of the high-pressure passages while the four other fluid inlet grooves (70a) cooperate respectively with four fluid discharge grooves (70b) and with said openings of different diameter (71, 72) for defining two series of two pairs of said different passages.

11. The device of claim 10 characterized in that the two other fluid discharge grooves (70b) do not cooperate with any of said openings of circular form.

**Ansprüche**

1. Hydraulische Verteilungseinrichtung für einen Servomechanismus, insbesondere für eine Servolenkung, mit zwei zylindrischen, koaxialen Verteilungselementen (14, 15), die aus einer relativen Neutralstellung in der einen und anderen Richtung eine begrenzte Relativdrehung um ihre gemeinsame Achse ausführen können, wobei die Verteilungselemente Öffnungen und Hohlräume aufweisen, die einen zwischen einer Strömungsquelle (27) und einem Reservoir (28) anschließbaren Strömungsmittelkreis bilden, wobei der Strömungsmittelkreis zwei parallelgeschaltete Verteilungszweige (56, 57) mit querschnittsveränderlichen Kanälen (60, 61, 62, 63, 64) aufweist, die in den zylindrischen Berührungsflächen (30, 31) der Verteilungselemente gebildet sind, und in jedem Zweig (56, 57) mit zwei Arten von Kanälen versehen ist, die einen entgegengesetzten Öffnungssinn für jede Drehrichtung aus der Neutralstellung heraus haben, wobei Kanäle dieser beiden Arten (« a », « b ») mit einem Arbeitsdruckanschluß (37, 39) des betrachteten Zweiges verbunden sind, dadurch gekennzeichnet, daß jeder Zweig mit mindestens einem querschnittsveränderlichen Hochdruckkanal (64a ; 64b) versehen ist, dessen vollständige Schließung für eine entsprechende Drehrichtung durch einen Relativdrehungswinkel bestimmt ist, bei dem die anderen Kanäle der gleichen Art geschlossen sind, daß dieser Hochdruckkanal mit einer Drosselstelle (65) in Reihe geschaltet ist und daß die aus diesem Kanal und dieser Drosselstelle gebildete Anordnung zwischen Anschlußmitteln (38) der Strömungsmittelquelle und des Arbeitsdruckanschlusses geschaltet ist.

2. Vorrichtung nach Anspruch 1, bei der die querschnittsveränderlichen Kanäle durch eine teilweise Überdeckung von in einer zylindrischen Fläche eines (15) der Verteilungselemente gebildeten längsverlaufenden Nuten (70a, 70b) und von das andere Verteilungselement (14) durchdringenden Löchern gebildet werden, dadurch gekennzeichnet, daß das dem Hochdruckkanal entsprechende Loch (78) über einen Abschnitt seiner Tiefe teilweise verschlossen ist durch einen rohrförmigen Abschnitt (78) eines vorgegebenen Innenquerschnitts, der die Drosselstelle (65) bildet, mit der der Hochdruckkanal in Reihe geschaltet ist.

3. Vorrichtung nach Anspruch 2, dadurch gekennzeichnet, daß das dem Hochdruckkanal entsprechende Loch (78) ein Loch kreisförmiger Kontur ist, das radial durch das entsprechende Verteilungselement (14) gebohrt ist.

4. Vorrichtung nach einem der vorhergehenden Ansprüche, bei dem die querschnittsveränderlichen Kanäle durch teilweise Überdeckung von in einer zylindrischen Fläche eines der Verteilungselemente gebildeten längsverlaufenden Nuten (70) und von das andere Verteilungselement durchdringenden Fenstern gebildet werden, dadurch gekennzeichnet, daß sämtliche Fenster (71, 72, 73) Löcher einer kreisförmigen Kontur sind.

5. Vorrichtung nach Anspruch 4, dadurch gekennzeichnet, daß Kanäle derselben Art (« a » oder « b ») parallelgeschaltet im selben Zweig (56 oder 57) des Strömungsmittelkreises mit unterschiedlichen Strömungsquerschnitten für mindestens eine Relativdrehung zwischen den beiden Verteilungselementen aus der Neutralstelung angeordnet sind, um ein gewünschtes Änderungsgesetz zwischen der zur Verfügung stehenden Druckzunahme an einem der Druckanschlüsse und dem Relativdrehungswinkel in dem entsprechenden Drehsinn zu erhalten.

6. Vorrichtung nach Anspruch 5, dadurch gekennzeichnet, daß Kanäle unterschiedlicher Art eines selben Zweiges (56, 57) paarweise angeordnet sind und ein Paar durch Zusammenwirken eines der besagten Löcher (71 oder 72) mit zwei angrenzenden parallelen Nuten (70a, 70b) gebildet wird, von denen die eine mit Anschlußmitteln (38) der Strömungsmittelquelle und die andere mit Anschlußmitteln (40) des Reservoirs (28) in Verbindung steht, wobei das besagte Loch in der Neutralstellung gleiche Abstände von diesen beiden Nuten hat, und daß zwei verschiedene Paare desselben Zweiges mit entsprechenden Löchern (71, 72) unterschiedlichen Durchmessers versehen sind.

7. Vorrichtung nach Anspruch 6, dadurch gekennzeichnet, daß jeder Zweig (56, 57) mit zwei identischen Reihen der besagten Kanalpaare und zwei Hochdruckkanälen (64a, 64b) versehen ist, wobei die Löcher (71, 72, 73) kreisförmiger Kontour und gleichen Durchmessers auf dem zylindrischen Verteilungselement (14), in dem sie gebildet sind, paarweise diametral einander gegenüberliegend angeordnet sind.

8. Vorrichtung nach Anspruch 7, dadurch gekennzeichnet, daß das die Nuten tragende Verteilungselement (15) mit acht Nuten versehen ist, vier Nuten (70a) zum Zuführen von Strömungsmittel, die mit den Anschlußmitteln (38) der Strömungsmittelquelle verbunden sind, und vier Nuten (70b) zum Abführen von Strömungsmittel, die mit den Anschlußmitteln (40) des Reservoirs (28) verbunden sind, wobei diese Nuten abwechselnd in kreisförmiger Symmetrie angeordnet sind, und daß für jeden Zweig ein Loch (73) eines der Hochdruckkanäle mit einer Kante der Nut (70a) zusammenwirkt, die außerdem den Kanal derselben Art eines der besagten Kanalpaare bildet, in Zusammenarbeit mit einem besagten Loch (71), das teilweise zwei angrenzende Nuten (70a, 70b) überdeckt.

9. Vorrichtung nach Anspruch 7, dadurch gekennzeichnet, daß das die Nuten tragende Verteilungselement (15) mit zehn Nuten versehen ist : sechs Nuten (70a) zum Zuführen von Strömungsmittel, die mit den Anschlußmitteln der Strömungsmittelquelle in Verbindung stehen, und vier Nuten (70b) zum Abführen von Strömungsmittel, die mit den Anschlußmitteln des Reservoirs verbunden sind, wobei diese Nuten in kreisförmiger Symmetrie abwechselnd in zwei Gruppen ($G_1$, $G_2$) verteilt sind, die jeweils drei Nuten zum Zuführen von Strömungsmittel und zwei Nuten zum Abführen von Strömungsmittel aufweisen, und daß für jeden Zweig die eine der Nuten zum Zuführen von Strömungsmittel jeder Gruppe mit einem Loch eines der Hochdruckkanäle zusammenwirkt, während die beiden anderen Nuten (70a) zum Zuführen von Strömungsmittel mit den beiden anderen Nuten (70b) zum Abführen von Strömungsmittel und den Löchern (71, 72) unterschiedlichen Durchmessers zusammenwirken, um zwei verschiedene Kanalpaare zu bilden.

10. Vorrichtung nach Anspruch 7, dadurch gekennzeichnet, daß das die Nuten tragende Verteilungselement (15) mit zwölf Nuten versehen ist, sechs Nuten (70a) zum Zuführen von Strömungsmittel, die mit den Anschlußmitteln der Strömungsmittelquelle verbunden sind, und sechs Nuten (70b) zum Abführen von Strömungsmittel, die mit den Anschlußmitteln des Reservoirs verbunden sind, wobei diese Nuten in kreisförmiger Symmetrie abwechselnd verteilt angeordnet sind, und daß für jeden Zweig (56 oder 57) zwei Nuten zum Zuführen von Strömungsmittel mit zwei Löchern (73) der Hochdruckkanäle zusammenwirken, während die vier anderen Nuten (70a) zum Zuführen von Strömungsmittel mit vier Nuten (70b) zum Abführen von Strömungsmittel und mit den besagten Löchern (71, 72) unterschiedlichen Durchmessers zusammenwirken, um zwei Reihen von unterschiedlichen Kanalpaaren zu bilden.

11. Vorrichtung nach Anspruch 10, dadurch gekennzeichnet, daß die beiden anderen Nuten (70b) zum Abführen von Strömungsmittel mit keinem der besagten Löcher kreisförmiger Kontour zusammenwirken.

FIG_1

FIG_2

0 053 560

FIG_3

FIG_4

FIG_5

FIG_6